# NEUE EUROPÄISCHE PATENTSCHRIFT

(11) **EP 0 626 567 B2**
(45) Veröffentlichungstag und Bekanntmachung des Hinweises auf die Entscheidung über den Einspruch: **09.04.2003**
(45) Hinweis auf die Patenterteilung: 21.01.1998
(21) Anmeldenummer: 94107720.8
(22) Anmeldetag: 18.05.1994
(51) Int. Cl.: G01F 1/58, G01F 1/00, G01F 1/60

(54) **Verfahren und Vorrichtung zur Bestimmung eines Volumenstromes**
Procedure and device for measuring volume flow
Procédé et dispositif pour la mesure du débit volumique

(30) Priorität: 25.05.1993 DE 4317366
(43) Veröffentlichungstag der Anmeldung: 30.11.1994
(73) Patentinhaber: BARTEC Messtechnik und Sensorik GmbH, 94239 Gotteszell (DE)
(72) Erfinder: Böhm, Alfred, DE-94234 Viechtach (DE); Geissler, Andreas, DE-94526 Metten (DE)
(74) Vertreter: Heim, Hans-Karl, Dipl.-Ing.

(56) Entgegenhaltungen:
- EP-A- 0 336 615
- EP-A- 0 521 169
- DE-A- 1 498 323
- DE-A- 1 548 949
- DE-A- 3 018 260
- DE-A- 3 207 357
- DE-A- 3 737 607
- DE-B- 1 291 523
- DE-U- 8 602 760
- GB-A- 2 064 130
- US-A- 4 122 714

## Beschreibung

Die Erfindung betrifft ein Verfahren zur Bestimmung eines Volumenstromes gemäß dem Oberbegriff des Patentanspruchs 1 sowie eine Vorrichtung zur Bestimmung eines Volumenstromes gemäß dem Oberbegriff des Patentanspruchs 2.

Ein derartiges Verfahren und eine derartige Vorrichtung sind aus der nicht vorveröffentlichten deutschen Patentanmeldung P 42 43 077.1 bekannt. Dort erfolgt die Bestimmung der Strömungsgeschwindigkeit und des Füllgrades an in axialer Erstreckung der Meßleitung und damit in Strömungsrichtung hintereinander gelegenen Orten, da die Meßeinrichtungen zur Bestimmung der Strömungsgeschwindigkeit des Fluids und zur Bestimmung des Füllgrades in Strömungsrichtung hintereinander angeordnet sind.

Bei sich rasch ändernden Geschwindigkeitsprofilen und Füllgradverteilungen kann es dadurch zu Ungenauigkeiten bei einer Messung kommen.

Aus der DE 41 08 138 A1 ist eine Vorrichtung zur Bestimmung eines Volumenstromes bekannt, die zur Verbesserung des Meßergebnisses bei Unterschreiten einer bestimmten Füllhöhe in der Meßleitung eine speziell für Teilfüllgrade optimierte Elektromagnetenanordnungaufweist, die anstelle einer für den Betrieb dervollständig gefüllten Meßleitung zuständigen Elektromagnetenanordnung aktiviert wird.

Aus der DE 37 37 607 A1 ist ein Verfahren zur Bestimung eines Volumentstromes bekannt, bei welchem auf unterschiedlichen Höhenniveaus ein Meßwert erfaßt wird, der dann mit einem Referenzwert verrechnet wird, und in welchem die Masse des durchströmenden Fluids chargenweise bestimmt wird. Weitere Verfahren zur Bestimmung des Volumenstromes, die auch den Füllgrad ermitteln, sind aus DE-A-1 291 523, US-A-4 122 714 und DE-A-3 018 260 bekannt.

Aus EP 0 336 615 A1 ist ein Verfahren und eine Vorrichtung bekannt, bei denen die Strömungsgeschwindigkeit mittels eines magnetisch-induktiven-Durchflussmesser ermittelt wird. Auch kann die Leitfähigkeits über eine dritte Elektrode zur Aussage über die Wasserqualitat bestimmt werden.

**Aufgabe** der Erfindung ist es, ein Meßverfahren zu schaffen, das es ermöglicht, den Volumenstrom des Mediums auch bei nicht vollständig gefülltem Meßrohr, sowie bei mit Fremdkörpern durchsetzter Flüssigkeit, insbesondere bei luftdurchsetzter Milch, exakt zu bestimmen, sowie eine Vorrichtung zur Bestimmung eines Volumenstromes zu schaffen, die bei einem besonders einfachen Aufbau eine außerordentlich genaue Messung gewährleistet.

Diese Aufgabe wird durch die Merkmale des Anspruches 1 gelöst.

Eine diese Aufgabe lösende Vorrichtung weist die Merkmale des Anspruches 2 auf.

Durch die Bestimmung der Strömungsgeschwindigkeit und des Füllgrades zum selben Zeitpunkt und am selben Ort bezüglich der Axialerstreckung der Meßleitung, durch die gleichzeitige Verwendung von Elektroden eines magnetisch-induktiven Durchflussmessers, erfolgt eine simultane Messung und exakte Zuordnung der beiden Meßwerte, wodurch Fehler bei der Auswertung vermieden werden.

Durch die erfindungsgemäße Verwendung einer Meßeinrichtung sowohl zur Bestimmung der Strömungsgeschwindigkeit des Fluids als auch zur Bestimmung des Füllgrades und somit im Bereich derselben Querschnittsebene einer Meßleitung sind zeitgleiche Messungen möglich und die aus dem Stand der Technik bekannten Zeitverschiebungen, die aus dem Versatz der beiden Meßeinrichtungen in Strömungsrichtung resultieren, sind bei der Vorrichtung gemäß der Erfindung vermieden. Insbesondere bei sich rasch ändernden Geschwindigkeitsprofilen und Füllgradverteilungen ist eine exakte Zuordnung beider Meßwerte gegeben und eine außerordentlich hohe Genauigkeit der Volumenstrommessung ermöglicht. Darüber hinaus vereinfacht sich der mechanische Aufbau der Vorrichtung.

Die Meßeinrichtung zur Bestimmung der Strömungsgeschwindigkeit des Fluids wird von einem magnetisch-induktiven Durchflußmesser (MID) gebildet.

Zur Bestimmung des Flüllgrades mit einer Leitfähigkeits-Meßeinrichtung werden die Elektroden des MID, von denen ein Spannungssignal für die Strömungsgeschwindigkeit abgegriffen wird, verwendet. So kann auch dann, wenn die zu messende Flüssigkeit von nichtleitenden Körpern, wie beispielsweise Luftblasen, durchsetzt ist, eine besonders genaue Bestimmung des durchströmenden Volumens erfolgen.

Die Zusammenfassung des magnetisch-induktiven Durchflußmessers und der Leitfähigkeits-Meßvorrichtung in einer integrierten Meßzelle gestattet einen besonders einfachen und kostengünstigen Aufbau der Vorrichtung. Besonders vorteilhaft ist es, wenn die Meßzelle zwei einander gegenüberliegende Elektroden aufweist, die in einem Abschnitt der Meßleitung mit im wesentlichen rechteckigem oder quadratischem Querschnitt derart angeordnet sind, daß eine gemeinsarne Flächennormale der Elektroden im wesentlichen senkrecht zu den Feldlinien des magnetisch-induktiven Durchflußmessers verläuft. Dabei kann der magnetisch-induktive Durchflußmesservon einer Signalquelle mit einem niederfrequenten oder getakteten Signal zur Erzeugung eines geschalteten bzw. getakteten Gleichfeld-Magnetfeldes mit konstanter Feldstärke beaufschlagbar sein. Dieses Magnetfeld induziert daraufhin eine an den Elektroden anliegende geschwindigkeitsabhängige Meßspannung. Diese Meßspannung wird bevorzugt der Auswerteeinrichtung zugeleitet. Die Verwendung eines zeitlich konstanten, geschalteten Gleichfeldes besitzt den Vorteil, daß weder im Rohr, noch in der Flüssigkeit Wirbelströme auftreten, so daß genauere Messungen möglich sind.

Vorteilhaft ist außerdem, wenn die Elektroden von einer Signalquelle mit einer Wechselspannung konstanter Höhe und im wesentlichen konstanter Frequenz beaufschlagbar sind. Dabei ist die Wechselspannung bevorzugt eine Sinusspannung. Die Frequenz der Wechselspannung ist wesentlich, vorzugsweise um drei Größenordnungen, höher als die Frequenz der geschwindigkeitsabhängigen Meßspannung. Dadurch wird eine saubere und einfache Trennung beider Signale im Zuge der Auswertung ermöglicht. Es ist besonders vorteilhaft, wenn die Frequenz des Signals zur Erzeugung des geschalteten bzw. getakteten Gleichfeld-Magnetfeldes im wesentlichen 15 Hz und die Wechselspannung zur Bestimmung des Leitwertes im wesentlichen 15 kHz beträgt.

Weiterhin wird ein Signal, welches den Wechselstrom repräsentiert, der aufgrund der Wechselspannung zwischen den Elektroden fließt, als Maß für die Leitfähigkeit des Fluids und damit als Maß für den Füllungsgrad der Auswerteeinrichtung zugeführt. Die Auswerteeinrichtung besitzt in einer bevorzugten Ausführungsform Filter, die das geschwindigkeitsabnängige Meßsignal und das leitfähigkeitsabhängige Meßsignal voneinander trennen.

Vorrichtungen zur galvanischen Trennung der Versorgungsspannungen und der Meßsignale sind in einer vorteilhaften Weiterbildung vorgesehen, wodurch eine gegenseitige Beeinflussung der Signale vermieden wird.

Zur Temperaturkompensation des Leitwertes des zu messenden Fluids ist es besonders vorteilhaft, wenn im Bereich der Sohle der Meßzelle ein vorzugsweise schnell reagierender Temperatursensor vorgesehen ist.

Die Anordnung jeweils einer punktförmigen Elektrode am Boden und an der Decke der Meßzelle und die Beaufschlagung dieser Elektroden mit einer Spannung, welche eine Frequenz aufweist, die sowohl von der Frequenz der Wechselspannung zur Leitfähigkeitsbestimmung als auch von der Frequenz des Signals zur Erzeugung des Gleichfeld-Magnetfeldes verschieden ist, gestattet es, eine Autokalibrierungsprozedur durchzuführen.

Eine Ausführung der Vorrichtung, bei der die Elektrocen aus korrosionsbeständigem Material bestehen, ist besonders wartungsfreundlich.

Weitere vorteilhafte Ausbildungen sind in den verbleibenden Ansprüchen angegeben.

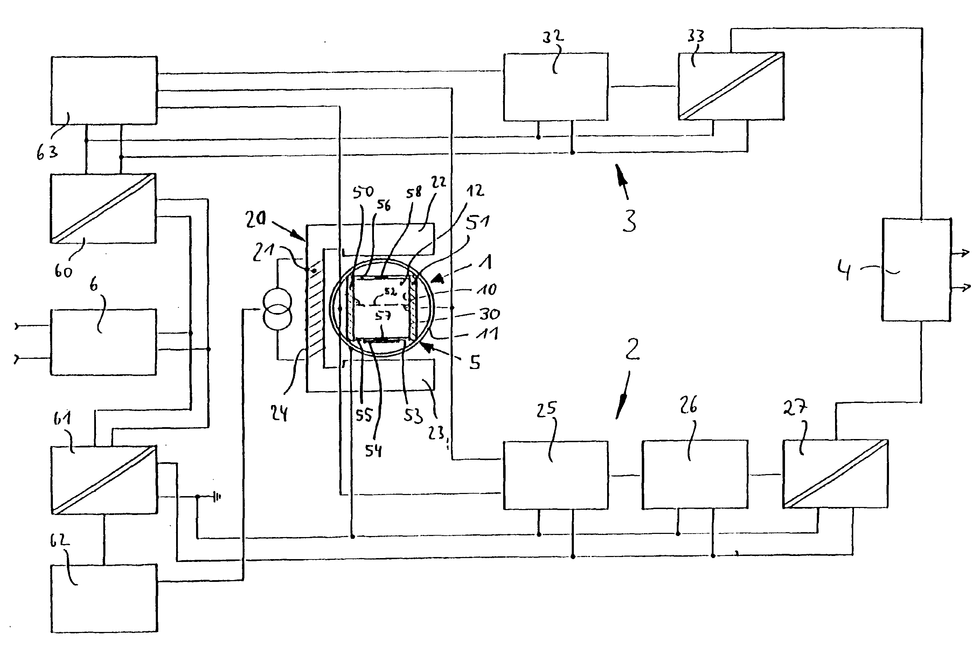

Die Erfindung wird nachfolgend anhand eines Beispiels unter Bezugnahme auf die Zeichnung näher erläutert. In dieser zeigt die einzige Figur einen schematischen Aufbau einer erfindungsgemäßen Vorrichtung.

In der Figur ist der schematische Aufbau einer Vorrichtung gemäß der Erfindung dargestellt, wobei eine Meßleitung 1 im Querschnitt der Meßebene gezeigt ist. Die Meßleitung 1 besteht aus einem Rohr 11, in welchem ein Abschnitt 10 von rechteckigem Strömungsquerschnitt ausgebildet ist. Der rechteckige Abschnitt 10 weist an seinen beiden Längsseiten jeweils eine flächige, rechteckige Elektrode 50, 51 auf, die jeweils bezüglich eines z.B. metallischen, geerdeten Rohr 11 elektrisch isoliert sind. An seiner Unterseite wird der rechteckige Abschnitt von einem Boden 55 und an seiner Oberseite von einer Decke 56 gebildet. Die beiden Elektroden 50, 51 sowie der Boden 55 und die Decke 56 begrenzen eine im Querschnitt rechteckige Meßkammer 12 einer Leitfänigkertsmessvorrichtung 30 in einer Meßzelle 5.

Ein im Bereich der Sohle 53 der Meßkammer 12, z. B. unterhalb des Bodens 55 angebrachter oder den Boden 55 bildender Temperatursensor 54 gehört in der dargestellten Ausführungsform neben einer im Boden 55 angeordneten punktförmigen Elektrode 57 und einer in der Decke 56 angeordneten punktförmigen Elektrode 58 ebenfalls zur Meßzelle 5. Die punktförmigen Elektroden 57, 58 ermöglichen es, insbesondere bei Absaugvorgängen aus Behältern, immer dann eine Autokalibrierungsprozedur durchzuführen, wenn das Rohr erstmals vollständig gefüllt ist. Der schnell reagierende, flächig aufgebaute Temperatursensor 54 dient zur Kompensation des Temperatureinflusses bei der Bestimmung des Leitwertes eines durch die Meßkammer fließenden bekannten Fluids. Gleichzeitig kann der Temperatursensor 54 zur Temperaturkompensation des Volumenstrommessers herangezogen werden.

Die rechteckige Meßkammer 12 mit flächigen, vertikal angeordneten Elektroden 50, 51 wird gleichzeitig als magnetisch-induktiver Durchflußmesser 20 (MID) betrieben, der einen beispielsweise U-förmigen Elektromagneten 21 aufweist, wobei die freien Schenkel 22, 23 des U-förmigen Jochs des Elektromagneten 21 oberhalb bzw. unterhalb der Meßkammer 12 bzw. der Meßzelle 5 vorgesehen sind. Eine Spule 24 im mittleren Abschnitt des Elektromagneten 21 regt diesen derart an, daß sich zwischen den freien Schenkeln 22 und 23 ein Magnetfeld ausbildet, dessen Feldlinien sich im wesentlichen vertikal, d.h. parallel zur Fläche der Elektroden 50, 51 und damit rechtwinklig zu einer diesen Elektroden gemeinsamen Flächennormalen 52 erstrecken.

Eine gemeinsame Spannungsversorgung 6 versorgt eine erste galvanische Trenneinrichtung 60 und eine zweite galvanische Trenneinrichtung 61 mit elektrischer Spannung. Die erste galvanische Trenneinrichtung 60 dient zur Spannungsversorgung der Meßeinrichtung 3 zur Füllgradbestimmung. Die zweite galvanische Trenneinrichtung 61 dient zur Spannungsversorgung der Meßeinrichtung 2 zur Bestimmung der Strömungsgeschwindigkeit, die, wie vorstehend beschrieben worden ist, einen magnetisch-induktiven Durchflußmesser aufweist. Eine galvanische Trennung verhindert die gegenseitige Beeinflussung der zur Füllgradbestimmung und zur Volumenstrommessung herangezogenen Signale.

Eine von der zweiten galvanischen Trenneinrichtung mit Spannung versorgte Ansteuerelektronik 62 für das Magnetfeld des Elektromagneten 21 beaufschlagt die Spule 24 des Elektromagneten 21 mit einem elektrischen Signal, vorzugsweise einer niederfrequenten Wechselspannung von beispielsweise 15 Hz. Dadurch werden Gleichspannungseffekte eliminiert, sowie Ablagerungen an den Elektroden und Migrationseffekte vermieden. Grundsätzlich kann aber auch eine getaktete Gleichspannung zum Betrieb des Magneten verwendet werden. Hierdurch wird das sich homogen parallel zu den Elektroden ausbreitende Magnetfeld mit konstanter Feldstärke erzeugt. Fließt nun eine leitende Flüssigkeit durch die Meßkammer 12, so induziert das Magnetfeld an den Elektroden 50, 51 eine geschwindigkeitsabhängige Spannung, welche im Millivoltbereich oder im Mikrovoltbereich liegt und frequenzmäßig dem angelegten Magnetfeld folgt. Diese Spannung wird an den Elektroden 50, 51 abgegriffen und einer Filterstufe 25 zugeführt, in welcher das niederfrequente Meßsignal des magnetisch-induktiven Durchflußmessers aus dem an den Elektroden anliegenden Gesamtsignal herausgefiltert wird. Das herausgefilterte Meßsignal des magnetisch-induktiven Durchflußmessers wird dann einer Auswerteelektronik 26 zugeführt, in welcher ein die Strömungsgeschwindigkeit oder unter Berücksichtigung der Querschnittsfläche der Meßzelle den Volumentstrom wiedergebendes Signal erzeugt wird. Dieses Signal wird dann einer ausgangsseitigen galvanischen Trenneinrichtung 27 zugeführt, die dieses Signal an eine Auswerteeinrichtung 4 weiterleitet.

Die erste galvanische Trenneinrichtung 60 zur Spannungsversorgung liefert ein Spannungsignal an einen Signalgenerator 63, der eine hochfrequente Sinusspannung erzeugt und diese an die Elektroden 50, 51 abgibt. Die an den Elektroden 50, 51 anliegende hochfrequente Wechselspannung, vorzugsweise im Bereich von 15 kHz, verursacht im die Meßkammer 12 durchfließenden Fluid einen Stromfluß, der abhängig ist von der Leitfähigkeit des Fluids. Die Höhe des Stromflusses wird im Signalgenerator 63 gemessen und einer Auswerteelektronik 32 zur Bestimmung des Füllgradsignals zugeführt. Das in der Auswertelektronik 32 ermittelte Füllgradsignal wird dann über eine galvanische Trennvorrichtung 33 der Auswerteeinrichtung 4 zugeleitet. Da die vom magnetisch-induktiven Durchflußmesser herrührenden Signale wesentlich kleiner sind als die Füllgradsignale, werden diese nur minimal und vernachlässigbar beeinflußt, so daß sich hier eine Filterung erübrigt.

Ebenfalls der Auswerteeinrichtung 4 zugeleitet wird das vom Temperatursensor 54 ermittelte Temperatursignal.

Die vom Signalgenerator 63 an die Elektroden 50, 51 angelegte Sinusspannung besitzt eine konstante Höhe und nahezu konstante Frequenz, wobei diese Frequenz wesentlich höher ist als die Meßfrequenz der geschwindigkeitsabhängigen Meßspannung. Der Wechselstrom, der sich aufgrund der an die Elektroden angelegten Wechselspannung ergibt, ist ein Maß für den Leitwert der Flüssigkeit und gestattet daher bei Kenntnis eines Kalibrierwertes Rückschlüsse auf den Füllgrad in der Meßkammer 12. Je höher der Leitwert des Fluids ist, umso höher ist der Füllgrad der Meßkammer mit leitfähigem Fluid. Einschlüsse von nichtleitendem Material in dem leitfähigen Fluid, beispielsweise von Luft in Milch, senken den Leitwert und liefern daher ein Signal für einen geringeren Füllgrad.

In der Auswerteeinrichtung 4 wird dann das Produkt aus dem Füllgrad und dem Durchflußvolumen gebildet, woraus sich der tatsächliche Volumenstrom des leitfähigen Fluids ergibt. Die vom Magnetfeld induzierte Spannung ist nach dem Faraday'schen Gesetz abhängig von der Stärke des Magnetfeldes, dem Rohrquerschnitt sowie von einer Gerätekonstanten und der mittleren Geschwindigkeit des durchströmenden Fluids. Eine Fehlerquelle kann aber darin liegen, daß das zu messende Fluid mit nichtleitenden Körpern (beispielsweise Luftblasen) durchsetzt ist oder daß das Rohr nicht vollständig gefüllt ist. Auftreten können diese Fehler z.B. beim Absaugen von Flüssigkeit aus einem fast leeren Behälter, wobei Luft mit angesaugt wird. Aus diesem Grund wird bei der Bestimmung des Volumenstroms zusätzlich und simultan in einer integrierten Einrichtung, insbesondere mit den Elektroden eines MID, der tatsächliche Füllgrad des Rohres im Bereich der Meßzelle gemessen und berücksichtigt.

Wie bereits ausgeführt worden ist, ist die Meßkammer 12 rechteckig ausgebildet oder von quadratischem Querschnitt, wobei die ebenfalls rechteckigen Elektroden 50, 51 im wesentlichen den vollständigen Querschnitt der Meßkammer 12 derart abdecken, daß auch kleine Füllstandhöhen erfaßt werden und gleichzeitig den Strömungsverlauf nicht beeinträchtigen. Um die innerhalb des Rohres 11 gelegene rechteckige bzw. quadratische Meßkammer 12 auszubilden, muß sich der Strömungsquerschnitt vor der Meßkammer vom runden Querschnitt des Rohres 11 zum rechteckigen bzw. quadratischen Querschnitt der Meßkammer verjüngen und anschließend wieder erweitern. Die Verjüngung und die Erweiterung sind dabei strömungstechnisch so gestaltet, daß es keine zusätzlichen Verwirbelungen, welche die Messung ungünstig beeinflussen könnten, ergibt. Die Elektroden 50, 51 sind dabei derart angeordnet, daß sie die Strömung im wesentlichen nicht beeinträchtigen. Die Elektroden sind aus korrosionsbeständigen Material gefertigt.

Durch die flächige Ausgestaltung der Elektroden 50, 51 werden auch Meßfehler verhindert, die bei punktförmigen Elektroden dadurch entstehen können, daß die Elektroden von Luftblasen belegt werden. Auf der Oberfläche der Elektroden 50, 51 vereinzelt auftretende Luftblasen können die Messungen aufgrund der verhältnismäßig großen Fläche der Elektroden 50, 51 nicht beeinflussen.

Das Rohr 11 sowie Decke 56 und Boden 55 bestehen im Bereich der Meßkammer 12 bevorzugterweise aus magnetisch nichtleitendem Material.

## Patentansprüche

1. Verfahren zur Bestimmung eines Volumenstromes, bei dem
- ein Fluid durch eine Meßleitung mit definiertem Querschnitt geführt wird,
- die Strömungsgeschwindigkeit des Fluids mit Elektroden eines magnetisch-induktiven Durchflußmessers (MID) bestimmt wird, wobei der magnetisch-induktive Durchflußmesser mit einem niederfrequenten oder getakteten Signal zur Erzeugung eines geschalteten oder getakteten Gleichfeld- oder Wechsel-Magnetfeldes beaufschlagt wird und eine an zwei Elektroden anliegende geschwindigkeitsabhängige Meßspannung induziert wird,
- der Füllgrad der Meßleitung bestimmt wird und
- der Volumenstrom aus der Strömungsgeschwindigkeit des Fluids, dem Querschnitt der Meßleitung und dem Füllgrad der Meßleitung ermittelt wird,
wobei
- die zwei Elektroden mit einer Wechselspannung beaufschlagt werden, wobei die Frequenz der Wechselspannung wesentlich höher ist als die Frequenz des niederfrequenten oder getakteten Signals, um so die Leitfähigkeit des Fluids zwischen den Elektroden zur Bestimmung des Füllgrades zu bestimmen, und
- daß die Bestimmung der Strömungsgeschwindigkeit und des Füllgrades zum selben Zeitpunkt und am selben Ort erfolgt und in einer Meßkammer mit Hilfe einer Ansteuer- und Auswerteelektronik durchgeführt wird.

2. Vorrichtung zur Bestimmung eines Volumenstromes, insbesondere zur Durchführung des Verfahrens nach Anspruch 1, mit
- einer von einem Fluid durchströmbaren Meßleitung (1),
- einem magnetisch induktiven Durchflußmesser (MID) (20) als Meßeinrichtung zur Bestimmung der Strömungsgeschwindigkeit des Fluids, wobei der magnetisch-induktive Durchflußmesser (20) eine Meßkammer (12) mit zwei einander gegenüberliegenden Elektroden (50, 51) aufweist und von einer Signalquelle (63) mit einem niederfrequenten oder getakteten Signal zur Erzeugung eines geschalteten oder getakteten Gleichfeld- oder Wechselfeld-Magnetfeldes beaufschlagbar ist, wobei dieses Magnetfeld eine an den Elektroden (50, 51) anliegende geschwindigkeitsabhängige Meßspannung induziert,
- einer Meßeinrichtung (3) zur Bestimmung des Füllgrades der Meßleitung (1) sowie
- einer Auswerteeinrichtung (4) zur Ermittlung des Volumenstromes,
wobei
die Elektroden (50, 51) von einer Signalquelle (63) mit einer Wechselspannung beaufschlagbar sind und daß ein Signal, welches den aufgrund der Wechselspannung zwischen den Elektroden (50, 51) fließenden Wechselstrom repräsentiert, als Maß für die Leitfähigkeit des Fluids und damit als Maß für den Füllgrad der Meßleitung (1) der Auswerteeinrichtung (4) zuführbar ist.

3. Vorrichtung nach Anspruch 2,
**dadurch gekennzeichnet,**
**daß** eine Meßzelle (5) für die Einrichtung (2)zurBestimmung der Strömungsgeschwindigkeit mit einem magnetisch-induktiven Durchflussmesser (20) und für die Einrichtung (3) zur Bestimmung des Füllgrades mit einer Leitfähigkeitsmeßvorrichtung (30) vorgesehen ist.

4. Vorrichtung nach Anspruch 2 oder 3,
**dadurch gekennzeichnet,**
**daß** flächige Elektroden (50, 51) einander gegenüberliegen und mit einem Boden (55) und einer Decke (56) die Meßkammer (12) der Meßzelle (5) bilden und daß eine gemeinsame Flächennormale (52) der Elekroden (50, 51) im wesentlichen senkrecht zu den Feldlinien des magnetisch-induktiven Durchflussmessers (20) verläuft.

5. Vorrichtung nach einem der Ansprüche 2 bis 4,
**dadurch gekennzeichnet,**
**daß** der magnetisch-induktive Durchflußmesser (20) von einer Signalquelle (21) mit einem niederfrequenten oder getakteten Signal zur Erzeugung eines geschalteten oder getakteten Gleichfeldoder Wechsel-Magnetfeldes mrt konstanter Feldstärke beaufschlagbar ist, wobei dieses Magnetfeld eine an den Elektroden (50, 51) anliegende geschwindigkeitsabhängige Meßspannung induziert, die der Auswerteeinrichtung (4) zugeleitet wird.

6. Vorrichtung nach einem der Ansprüche 2 bis 5,
**dadurch gekennzeichnet,**
**daß** die Elektroden (50, 51) von einer Signalquelle (63) mit einer Wechselspannung konstanter Höhe und im wesentlichen konstanter Frequenz beaufschlagbar sind, daß die Wechselspannung eine Sinusspannung ist und daß die Frequenz der Wechselspannung wesentlich, vorzugsweise um drei Größenordnungen. höher ist als die Frequenz der geschwindigkeitsabhängigen Meßspannung.

7. Vorrichtung nach Anspruch 6,
**dadurch gekennzeichnet,**
**daß** die Frequenz des Signals zur Erzeugung des Gleichfeld-Magnetfeldes im wesentlichen 15 Hz und die Wechselspannung zur Bestimmung der Leitfähigkeit im wesentlichen 15 kHz beträgt.

8. Vorrichtung nach einem der Ansprüche 2 bis 7,
**dadurch gekennzeichnet,**
**daß** zur Signalaufbereitung zumindest ein Filter (25) vorgesehen ist, das das geschwindigkeitsabhängige Meßsignal und das leitfähigkeitsabhängige Meßsignal voneinander trennt, und daß Einrichtungen (27; 33) zur galvanischen Trennung der Versorgungsspannungen und der Meßsignale vorgesehen sind.

9. Vorrichtung nach einem der Ansprüche 2 bis 8,
**dadurch gekennzeichnet,**
**daß** im Bereich der Sohle (53) der Meßzelle (5) ein vorzugsweise schnell reagierender Temperatursensor (54) vorgesehen ist.

10. Vorrichtung nach einem der Ansprüche 2 bis 9,
**dadurch gekennzeichnet,**
**daß** am Boden (55) und an der Decke (56) der Meßzelle (5) jeweils eine punktförmige Elektrode (57, 58) angeordnet ist, die mit einer Spannung beaufschlagbar ist, welche eine Frequenz aufweist, die sowohl von der Frequenz der Wechselspannung zur Leitfähigkeitsbestimmung als auch von der Frequenz des Signals zur Erzeugung des Gleichfeld-Magentfeldes verschieden ist.

11. Vorrichtung nach einem der Ansprüche 2 bis 10,
**dadurch gekennzeichnet,**
**daß** die Elektroden (50, 51), die flächig und im wesentlichen eben ausgebildet sind und den vollen Querschnitt der Meßkammer (12) abdecken, aus einem korrosionsbeständigen Material bestehen.

12. Vorrichtung nach einem der vorhergehenden Ansprüche 2 bis 11,
**dadurch gekennzeichnet,**
**daß** sich der Querschnitt des Rohres (11) von einem im wesentlichen runden Querschnitt vor der Meßkammer (12) zu einem rechteckigen, insbesondere quadratischen Querschnitt in der Meßkammer (12) verjüngt, so daß die Strömungsgeschwindigkeit in der Meßkammer (12) gegenüber dem Rohr (11) erhöht ist.

## Claims

1. Method for determining a volume flow, in which
- a fluid is passed through a measuring line with a clearly defined cross-section,
- the flow velocity of the fluid is determined with electrodes of a magnetic-inductive flowmeter (MID), which is supplied with a low frequency or clocked signal for generating a switched or clocked steady or alternating magnetic field and a velocity-dependent measuring voltage applied to two electrodes is induced,
- the degree of filling of the measuring line is determined and
- the volume flow is established from the flow velocity of the fluid, the cross-section of the measuring line and the degree of filling of the measuring line,
wherein
- an a.c. voltage is supplied to the two electrodes, the frequency of the a.c. voltage being significantly higher than the frequency of the low frequency or clocked signal, so as in this way to determine the conductivity of the fluid between the electrodes for establishing the degree of filling and
- the determination of the flow velocity and the degree of filling takes place at the same time and at the same location and is performed in a measuring chamber with the aid of control and evaluation electronics.

2. Apparatus for determining a volume flow, particularly for performing the method according to claim 1, having
- a measuring line (1) through which can flow a fluid,
- a magnetic-inductive flowmeter (MID) (20) as the measuring device for determining the flow velocity of the fluid, the magnetic-inductive flowmeter (20) having a measuring chamber (12) with two facing electrodes (50, 51) and can be supplied by a signal source (63) with a low frequency or clocked signal for generating a switched or clocked steady or alternating magnetic field, which induces a velocity-dependent measuring voltage applied to the electrodes (50, 51),
- a measuring device (3) for determining the degree of filling of the measuring line (1) and
- an evaluating device (4) for establishing the volume flow,
- wherein the electrodes (50, 51) can be supplied by a sinal source (63) with an a.c. voltage and a signal, which represents the alternating current flowing between the electrodes (50, 51) due to the a.c. voltage can be supplied to the evaluating device (4) as a measure for the conductivity of the fluid and therefore as a measure for the degree of filling of the measuring line (1).

3. Apparatus according to claim 2,
**characterized in that**
a measuring cell (5) is provided for the device (2) for determining the flow velocity with a magnetic-inductive flowmeter (20) and for the device (3) for determining the degree of filling with a conductivity measuring device (30).

4. Apparatus according to claim 2 or 3,
**characterized in that**
flat electrodes (50, 51) face one another and form with a base (55) and a cover (56) the measuring chamber (12) of the measuring cell (5) and that a common surface normal (52) of the electrodes (50, 51) is substantially perpendicular to the field lines of the magnetic-inductive flowmeter (20).

5. Apparatus according to one of the claims 2 to 4,
**characterized in that** the magnetic-inductive flowmeter (20) can be supplied by a signal source (21) with a low frequency or clocked signal for generating a switched or clocked steady or alternating magnetic field with a constant field strength, said magnetic field inducing a velocity-dependent measuring voltage applied to the electrodes (50, 51) and which is fed to the evaluating device (4).

6. Apparatus according to one of the claims 2 to 5,
**characterized in that**
the electrodes (50, 51) are supplied by a signal source (63) with an a.c. voltage of constant level and substantially constant frequency, that the a.c. voltage is a sinusoidal voltage and that the frequency of the a.c. voltage is significantly higher, preferably by three orders of magnitude, than the frequency of the velocity-dependent measuring voltage.

7. Apparatus according to claim 6,
**characterized in that**
the frequency of the signal for generating the steady magnetic field is substantially 15 Hz and the a.c. voltage for determining the conductivity is substantially 15 kHz.

8. Apparatus according to one of the claims 2 to 7,
**characterized in that**
for signal preparation at least one filter (25) is provided, which separates from one another the velocity-dependent measuring signal and the conductivity-dependent measuring signal and that there are devices (27, 33) for the galvanic separation of the supply voltages and the measuring signals.

9. Apparatus according to one of the claims 2 to 8,
**characterized in that**
in the vicinity of the sole (53) of the measuring cell (5) is provided a preferably rapidly reacting temperature sensor (54).

10. Apparatus according to one of the claims 2 to 9,
**characterized in that**
on the base (55) and cover (56) of the measuring cell (5) is in each case arranged a point electrode (57, 58), which can be supplied with a voltage having a frequency differing both from the frequency of the a.c. voltage for conductivity determination and from the frequency of the signal for generating the steady magnetic field.

11. Apparatus according to one of the claims 2 to 10,
**characterized in that**
the electrodes (50, 51) which are flat and substantially planar and cover the complete cross-section of the measuring chamber (12) are made from a corrosion-resistant material.

12. Apparatus according to one of the preceding claims 2 to 11,
**characterized in that**
the cross-section of the pipe (11) tapers from a substantially round cross-section upstream of the measuring chamber (12) to a rectangular and in particular square cross-section in the measuring chamber (12), so that the flow velocity in the measuring chamber (12) is increased compared with the pipe (11).

## Revendications

1. Procédé de détermination d'un débit volumique, dans lequel :
- un fluide est envoyé à travers une conduite de mesure de section transversale définie,
- la vitesse d'écoulement du fluide est déterminée avec des électrodes d'un débitmètre magnéto-inductif (MID), le débitmètre magnéto-inductif étant excité par un signal basse fréquence ou pulsé afin de produire un champ magnétique continu ou alternatif commuté ou pulsé et une tension de mesure fonction de la vitesse étant induite sur deux électrodes,
- le niveau de remplissage de la conduite de mesure est déterminé, et
- le débit volumique est déterminé à partir de la vitesse d'écoulement du fluide, de la section transversale de la conduite de mesure et du niveau de remplissage de la conduite de me sure,
dans lequel
- les deux électrodes sont excitées avec une tension alternative, la fréquence de la tension alternative étant nettement supérieure à la fréquence du signal basse fréquence ou pulsé, afin de déterminer ainsi la conductivité du fluide entre les électrodes afin de déterminer le niveau de remplissage, et
- les déterminations de la vitesse d'écoulement et du niveau de remplissage se font au même moment et au même endroit et sont effectuées dans une chambre de mesure, à l'aide d'un appareillage électronique de commande et d'analyse.

2. Dispositif de détermination d'un débit volumique, en particulier pour appliquer le procédé selon la revendication 1, avec
- une conduite de mesure (1) pouvant être traversée par un fluide,
- un débitmètre magnéto-inductif (MID) (20) servant de dispositif de mesure pour déterminer la vitesse d'écoulement du fluide, le débitmètre magnéto-inductif (20) présentant une chambre de mesure (12) avec deux électrodes (50, 51) en vis-à-vis et pouvant être excité par un signal basse fréquence ou pulsé afin de produire un champ magnétique continu ou alternatif commuté ou pulsé, ce champ magnétique induisant une tension de mesure fonction de la vitesse sur les deux électrodes (50, 51),
- un dispositif de mesure (3) pour déterminer le niveau de remplissage de la conduite de mesure (1), et
- un dispositif d'analyse (4) pour déterminer le débit volumique,
dans lequel
les électrodes (50, 51) peuvent être excitées par une source de signal (63) avec une tension alternative, et un signal qui représente le courant alternatif s'écoulant entre les électrodes (50, 51) par suite de la tension alternative peut être envoyé au dispositif d'analyse (4) en tant que mesure de la conductivité du fluide, donc en tant que mesure du niveau de remplissage de la conduite de mesure (1).

3. Dispositif selon la Revendication 2,
***caractérisé en ce qu'***
une cellule de mesure (5) est prévue pour le dispositif (2) de détermination de la vitesse d'écoulement avec un débitmètre magnéto-inductif (20) et pour le dispositif (3) de détermination du niveau de remplissage avec un dispositif (30) de mesure de conductivité.

4. Dispositif selon la Revendication 2 ou 3,
***caractérisé en ce que***
des électrodes en nappe (50, 51) se font face et formant, avec un fond (55) et un dessus (56), la chambre de mesure (12) de la cellule de mesure (5), et
***en ce qu***'une normale (52) commune aux surfaces des électrodes (50, 51) s'étend pour l'essentiel perpendiculairement aux lignes de champ du débitmètre magnéto-inductif (20).

5. Dispositif selon l'une quelconque des Revendications 2 à 4,
***caractérisé en ce que***
le débitmètre magnéto-inductif (20) peut être excité depuis une source de signaux (21) par un signal basse fréquence ou pulsé afin de produire un champ magnétique continu ou alternatif commuté ou pulsé d'intensité constante, ce champ magnétique induisant sur les électrodes (50, 51) une tension de mesure fonction de la vitesse, tension qui est envoyée au dispositif d'analyse (4).

6. Dispositif selon l'une quelconque des Revendications 2 à 5,
***caractérisé en ce que***
les électrodes (50, 51) peuvent être excitées depuis une source de signaux (63) par une tension alternative d'amplitude constante et de fréquence sensiblement constante,
***en ce que*** la tension alternative est une tension sinusoïdale et
***en ce que*** la fréquence de la tension alternative est nettement supérieure, de préférence de trois ordres de grandeur, à la fréquence de la tension de mesure fonction de la vitesse.

7. Dispositif selon la Revendication 6,
***caractérisé en ce que***
la fréquence du signal destiné à produire le champ magnétique continu vaut sensiblement 15 Hz et la tension alternative destinée à déterminer la conductivité vaut sensiblement 15 kHz.

8. Dispositif selon l'une quelconque des Revendications 2 à 7,
***caractérisé en ce que*,**
pour traiter le signal, au moins un filtre (25) est prévu, qui sépare le signal de mesure fonction de la vitesse et le signal de mesure fonction de la conductivité, et
***en ce que*** des dispositifs (27, 33) sont prévus pour assurer la séparation galvanique des tensions d'alimentation et des signaux de mesure.

9. Dispositif selon l'une quelconque des Revendications 2 à 8,
***caractérisé en ce qu'***
au niveau de la sole (53) de la cellule de mesure (5), il est prévu un capteur de température (54), de préférence réagissant rapidement.

10. Dispositif selon l'une quelconque des Revendications 2 à 9,
***caractérisé en ce qu'***
au fond (55) et sur le dessus (56) de la cellule de mesure (5), est placée à chaque fois une électrode ponctuelle (57, 58), qui peut être excitée avec une tension qui présente une fréquence différente, à la fois, de la fréquence de la tension alternative destinée à déterminer la conductivité et de la fréquence du signal destiné à produire le champ magnétique continu.

11. Dispositif selon l'une quelconque des Revendications 2 à 10,
***caractérisé en ce que***
les électrodes (50, 51), qui sont conformées en nappe et de préférence planes et qui couvrent toute la section transversale de la chambre de mesure (12), sont composées d'un matériau résistant à la corrosion.

12. Dispositif selon l'une quelconque des Revendications 2 à 11,
***caractérisé en ce que***
la section transversale du tube (11) s'effile d'une section transversale sensiblement ronde avant la chambre de mesure (12) à une section transversale rectangulaire, en particulier carrée, dans la chambre de mesure (12), de sorte que la vitesse d'écoulement dans la chambre de mesure (12) est augmentée par rapport au tube (11).
